# EUROPÄISCHE PATENTSCHRIFT

(11) **EP 1 090 234 B1**
(45) Veröffentlichungstag und Bekanntmachung des Hinweises auf die Patenterteilung: **21.07.2004**
(21) Anmeldenummer: 99927716.3
(22) Anmeldetag: 23.04.1999
(51) Int. Cl.: F16D 3/50, F16D 3/68, C08K 5/00

(54) **ELASTISCHES ANTISTATISCHES KUPPLUNGSELEMENT**
ELASTIC ANTISTATIC COUPLING ELEMENT
ELEMENT D'ACCOUPLEMENT ANTISTATIQUE ELASTIQUE

(30) Priorität: 24.04.1998 DE 29807486 U
(43) Veröffentlichungstag der Anmeldung: 11.04.2001
(73) Patentinhaber: Tschan GmbH, 66538 Neunkirchen (DE)
(72) Erfinder: MASKE, Joachim, D-66459 Kirkel (DE)
(74) Vertreter: Neidl-Stippler, Cornelia, Dr.
(86) Internationale Anmeldenummer: PCT/DE1999/001224
(87) Internationale Veröffentlichungsnummer: WO 1999/056030

(56) Entgegenhaltungen:
- EP-A- 0 340 618
- EP-A- 0 372 417
- EP-A- 0 586 115
- DD-A- 221 463
- DE-A- 4 335 115
- DE-U- 29 807 486
- US-A- 4 448 946
- US-A- 4 521 582
- US-A- 4 621 106

## Beschreibung

Die Erfindung betrifft ein elastisches antistatisches Kupplungselement.

Welienausgleichskupplungen, insbesondere nachgiebige, besitzen üblicherweise dynamisch hoch beanspruchte elastische Elemente. Dabei handelt es sich meistens um körperelastische Übertragungselemente aus einem elastischem Elastomermaterial aus Kunststoff oder Gummi. Da Wellenausgleichskupplungen neben der Drehmomentenübertragung unter anderem auch die Aufgabe haben, einen oft unvermeidlichen Wellenversatz zweier zu verbindender Aggregate auszugleichen, sind die Übertragungselemente zudem einer ständigen Reibung unterworfen, was insbesondere in trockener Umgebung zu elektrostatischer Aufladung der Übertragungselemente führen kann. Bekanntlich neigen Kunststoffe mit Polyamid oder mit Hamstoffcharakter mit polaren Gruppen dazu, erhebliche Ladungen auf ihrer Oberfläche anzusammeln. Dies kann zu elektrischen Stromschlägen bis hin zu Funkenüberschlägen mit Brand- oder Explosionsfolgen führen. Dieses Phänomen der Reibungselektrizität ist bei der Handhabung von Werkstoffen aus Gummi oder Kunststoff mit einem hohen spezifischen elektrischen Widerstand (> 10¹² Ohm cm) bekannt. Beispielhaft anzuführen sind dafür das Entformen von Spritzgußteilen, das Abwickeln von Folien oder das pneumatische Fördern von Kunststoff-Polyurethanpulver oder -Granulaten.

Um diese elektrostatische Aufladung zu verhindern, werden Verfahren zur lonisation der Luft mit Hilfe von Sprühelektroden oder radioaktiven Präparaten, das Auftragen von hygroskopischen Schichten auf die Polymere oder die Erhöhung der Leitfähigkeit der Polymere durch Zugabe von Antistatika, wie Rußpartikel, die über die Betriebsdauer zur Oberfläche wandern, angewendet. Antistatika sind meist. hydrophile Stoffe z.B. Aminderivate, Polyethylenglykolester, Glycerinmono- oder distearate, die die Oberflächenwiderstände von Kunststoffen > 10¹⁵ Ohm auf etwa < 10¹¹ bis 10¹⁰ Ohm herabsetzen, daß Staubanziehung u.a. Störungen durch eine reibungselektrische Aufladung verhindert werden. Die Wirkung "temporärer" Antistatika, die zur Oberfläche auswandern oder auf diese aufgebracht werden, ist zeitlich begrenzt. "Inkorporierte" Dauerantistatika behalten ihre Wirkung.

Mit Leitfähigkeitsrußen in Thermoplasten, vor allem in Polyolefincompounds, erreicht man spezifische Durchgangswiderstände von 10² - 10⁵ Ohm cm. Die Anwendungen reichen von Mantelmassen bis zu elektrischen Flächenheizkörpern oder Sicherheitsschuhsohlen.

Leitfähige Zusatzstoffe, die in geringen Mengen den spezifischen Widerstand bis < 1 Ohm cm vermindern können, sind von Bedeutung für die Abschirmung hochfrequenter Emissionen von Geräten der Elektronik- und Elektroindustrie. Mit Haftvermittlem beschichtete Aluminiumflocken, Mikro-Stahlfasern, versilberte Glasfasern und -kugeln, in geringen Mengen hoch wirksame, vernickelte Graphit-Feinstfasem 8 µm + 0,5 µm Ni-Schicht, Spezial-Ruße und Carbonfasem werden für die behördliche geforderten EMI = Electro-Magnetic-Interference und Radio-Frequenz- RFI Dämpfung im 10kHz- bis 140 GHz-Bereich mit mittlerer bis guter Schirmwirkung um > 60 db angewandt. Gehäuse-Innenflächen werden zur Abschirmung mit Leitlakken, 5 µm AI-Vakuumbedampfung Elamet-Verfahren , Metall-Sprühen oder chemogalvanisch beschichtet. Konstitutiv "intrinsisch" leitfähige Kunststoffe "Dotierte" Polyacetylene und Polypyrrole sind in der Entwicklung. Es wurde auch versucht, die Aufladung durch direkte Erdung der sich aufladenden Teile zu verhindern.

Dies war aber nicht immer erfolgreich und hatte noch dazu den Nachteil, daß die Erdungsmaßnahmen beim Endabnehmer durchgeführt werden mußten und diesem zusätzliche Kosten verursachten. Ein geringes Restrisiko von Aufladungen blieb stets bestehen, da nicht sichergestellt werden konnte, daß Aufladungen vermieden werden.

Antistatische zellige Polyurethan-Gießelastomere, die Ruß enthalten, sind in der DE 35 28 597 A1 beschrieben. Diese enthalten Ruß, um eine verbesserte Leitfähigkeit des Kunststoffmaterials zu erzielen. Ruß ist aber insofern nachteilig, als er färbt und außerdem die Eigenschaften des Kunststoffes verändert. Aus der DE-A-43 35 115 ist ein elastisches, antistatisches Kupplungselement bekanntgeworden, in dem elastisches Polyurethan leitfähige Kohle- oder Metallfasern als Antistatikum enthält. Derartige Kupplungselemente laden sich statisch nicht auf und sind daher für den Einsatz in explosionsgefährdeter Umgebung geeignet. Die im bekannten Kupplungselement vorliegenden Antistatika sind anorganisch und verbinden sich daher schlecht mit Polyurethan, was bei der hohen mechanischen Beanspruchung von Kupplungselementen unerwünscht. ist, da es zum Versagen dieser Teile führt. Es ist demgegenüber Aufgabe der Erfindung, ein verbessertes antistatisches, elastisches Polymer-Kupplungselement zu schaffen, das die Nachteile des Standes der Technik vermeidet. Die Aufgabe wird erfindungsgemäß durch ein Kupplungselement gelöst, das es im wesentlichen nicht thermoplastisches Polyurethan, das ein organisches Antistatikum, ausgewählt aus der Gruppe bestehend aus Ethoxilaten von Fettalkoholen, Fettsäuren und Alkylphenolen, Alkylsulfaten und -phosphaten, quartären Ammoniumverbindungen, Aminderivaten, Polyethylenglykolestern und Glycerinmono- oder -distearaten aufweist, umfasst. Nicht thermoplastisches Polyurethan besitzt den Vorteil, daß es auch bei erhöhten Temperaturen formstabil bleibt. Vorteilhafterweise können für das Polyurethan als Polyole Polyesterpolyole oder aber Butandiol verwendet werden. Durch die Diole kann die Netzwerkdichte gesteuert und Einfluß auf die Eigenschaften genommen werden. Als besonders bevorzugte Isocyanatkomponente ist 1,5-Naphthylendiisocyanat geeignet. Das organische Antistatikum kann beispielsweise aus der Gruppe bestehend aus Ethoxilaten von Fettalkoholen, Fettsäuren und Alkylphenolen, Alkylsulfate und -phosphate, quartären Ammoniumverbindungen, Aminderivaten, Polyethylenglykol-estern, Glycerinmono- oder -distearaten ausgewählt sein. Besonders bevorzugt werden quartäre Ammoniumverbindungem verwendet, die in günstiger Weise an den polaren Gruppen des Polyurethan haften und derart eine Langzeit-Antistatik verursachen, ohne aber das Verhalten des Kunststoffes als solcher zu verändern. Die günstigen Eigenschaften des nicht-thermoplastischen Polyurethans bleiben also erhalten. Dabei ist es vorteilhaft, wenn das elastisches Kupplungselement einen Oberflächenwiderstand von weniger als 3*10⁸ Ohm aufweist. Durch den relativ geringen Oberflächenwiderstand ist ein Einsatz der Kupplungen in brand- bzw. , explosionsgefährdeter Umgebung möglich. Überraschenderweise kann durch den Zusatz eines Antistatikums der besonders geeigneten Gruppe der quartären Ammonium-Antistatika eine gleichbleibende, langanhaltende antistatische Wirkung erzielt werden.

Bevorzugt ist das elastische Kupplungselement ein Zwischenringwerkstoff für Kupplungen, bspw. für eine Klauenkupplung, wie sie im DE-PS 2153 411 beschrieben ist.

Das elastische Kupplungselement eignet sich besonders für den Einsatz im Bergbau, wie dem Steinkohlebergbau.

Besonders geeignet ist nicht thermoplastisches Polyurethan mit einer Shore-Härte zwischen 60 bis 100 A, bevorzugt 65 bis 95 A und besonders bevorzugt 70 bis 90 A.

Durch die Herabsetzung des Oberflächenwiderstands durch ein Antistatikum ist ein Einsatz desselben in brand- bzw. explosionsgefährdeter Umgebung möglich.

Erfindungsgemäße Elemente können bspw. die Bedingungen der DIN 22100 - "Betriebsmittel und Betriebsstoffe aus Kunststoffen zur Verwendung in Bergwerken" unter Tage erfüllen.

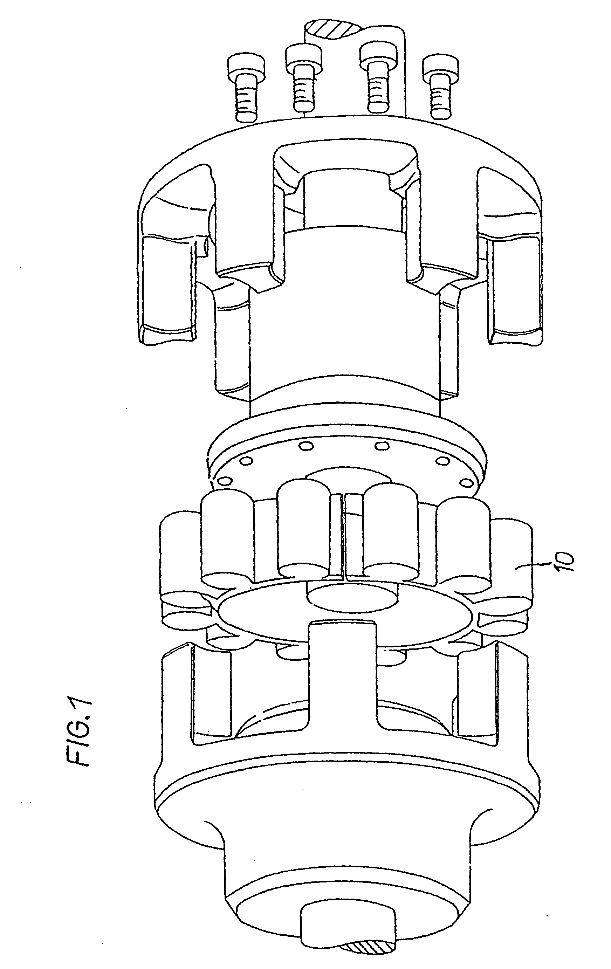

Nachfolgend wird die Erfindung anhand des in der nachfolgenden, eine einzige Figur aufweisenden Zeichnungen dargestellten Ausführungsbeispieles näher erläutert, auf das der Schutzumfang aber keineswegs eingeschränkt ist. Diese zeigt eine Explosionszeichnung einer Klauenkupplung.

Die in der einzigen Figur dargestellte elastische Klauenkupplung weist ein erfindungsgemäßes elastisches ringförmiges Kupplungselement 10 auf.

Dieses Kupplungselement besteht aus einem nicht thermoplastischen Polyurethan mit einer Shore-Härte nach DIN 53505 von etwa 80 - 95, einer Spannung nach DIN 53504 bei 300% Dehnung von etwa 8,5 Mpa, eine Rückprallelastizität nach DIN 53512 von 53 - 57%. Durch den Zusatz eines organischen Antistatikums aus der Gruppe der quartären Ammoniumverbindungen, wie Dimethylethylalkylammonium-methylsulfat wurde der Oberflächenwiderstand des Kupplungselements auf kleiner als 3*10⁸ Ohm eingestellt.

Der antistatische elastische Zwischenring 10 wurde mit einem aus Polyesterpolyol und Naphtylen-1,5-diisocyanat hergestellten Polyurethan, wobei bei der Polymerisation Dimethylethylalkylammoniummethylsulfat untergemischt wurde, hergestellt Dieser elastische Kupplungswerkstoff besitzt über einen großen Temperaturbereich eine hohe Rückprallelastizität, sehr niedrigen Abriebverlust, einen extrem geringen Druckverformungsrest und eine hohe Thermostabilität.

Dabei ist die Erfindung keineswegs auf die hier dargestellte Ausführungsform eines Zwischennngs für spezielle Klauenkupplungen beschränkt, sondern kann auch in anderen Formen als Zwischenring für Kupplungen hergestellt werden.

Weitere Merkmale und Vorteile der Erfindung ergeben sich aus den Ansprüchen sowie der Zeichnung, auf deren Offenbarung interpretiert durch das Fachwissen des Fachmanns, ausdrücklich bezug genommen wird, so daß die Erfindung keineswegs auf die beispielhaft dargestellten Ausführungsformen beschränkt ist, sondern Abweichungen und Änderungen, wie sie dem Fachmann geläufig sind, durchgeführt werden können, ohne vom Schutzumfang abzuweichen.

## Patentansprüche

1. Elastisches antistatisches Kupplungselement, **dadurch gekennzeichnet, daß** es im wesentlichen nicht thermoplastisches Polyurethan, das ein organisches Antistatikum, ausgewählt aus der Gruppe bestehend aus Ethoxilaten von Fettalkoholen, Fettsäuren und Alkylphenolen, Alkylsulfaten und -phosphaten, quartären Ammoniumverbindungen, Aminderivaten, Polyethylenglykolestern und Glycerinmono- oder -distearaten aufweist, umfasst.

2. Elastisches antistatisches Kupplungselement nach Anspruch 1, **dadurch gekennzeichnet, daß** das Polyurethan mit Polyesterpolyolen als Alkoholkomponente hergestellt ist.

3. Elastisches antistatisches Kupplungselement nach Anspruch 1, **dadurch gekennzeichnet, daß** das Polyurethan mit Butandiol als Alkoholkomponente hergestellt ist.

4. Elastisches antistatisches Kupplungselement nach Anspruch 1 bis 3, **dadurch gekennzeichnet, daß** das Polyurethan mit 1,5-Naphthylendiisocyanat als lsocyanatkomponente hergestellt ist.

5. Elastisches antistatisches Kupplungselement nach einem der vorangehenden Ansprüche, **dadurch gekennzeichnet, daß** es einen Oberflächenwiderstand von weniger als 3*10⁸ Ohm aufweist.

6. Elastisches antistatisches Kupplungselement nach einem der vorangehenden Ansprüche, **dadurch gekennzeichnet, daß** es ein Zwischenring für Kupplungen, insbesondere Klauenkupplungen, ist.

7. Elastisches antistatisches Kupplungselement nach einem der vorangehenden Ansprüche, **dadurch gekennzeichnet, daß** es ein Zwischenring für Kupplungen in explosionsgefährdeter Umgebung, wie im Bergbau, ist.

## Claims

1. Elastic antistatic coupling element, **characterized in that** it essentially comprises: non-thermoplastic polyurethane having organic antistatic, selected from the group consisting of: ethoxylates of fatty alcohols, fatty acids and alkylphenols, alkyl sulphates and phosphates, quaternary ammonium compounds, amine derivatives, polyethylene glycol esters and glycerol mono- or distearates.

2. Elastic antistatic coupling element according to Claim 1, **characterized in that** the polyurethane has been prepared using polyester-polyols as alcohol component.

3. Elastic antistatic coupling element according to Claim 1, **characterized in that** the polyurethane has been prepared using butanediol as alcohol component.

4. Elastic antistatic coupling element according to Claims 1 to 3, **characterized in that** the polyurethane has been prepared using naphthalene-1,5-diisocyanate as the isocyanate component.

5. Elastic antistatic coupling element according to one of the preceding claims, **characterized in that** it has a surface resistance of less than 3*10⁸ ohm.

6. Elastic antistatic coupling element according to one of the preceding claims, **characterized in that** it is an intermediate ring for couplings, in particular for claw couplings.

7. Elastic antistatic coupling element according to one of the preceding claims, **characterized in that** it is an intermediate ring for couplings in explosion-risk environments, such as in mining.

## Revendications

1. Élément de couplage antistatique élastique, **caractérisé en ce qu'**il comprend, pour l'essentiel, un polyuréthanne non thermoplastique, qui présente un agent antistatique organique, sélectionné parmi le groupe constitué d'éthoxylates d'alcools gras, d'acides gras et d'alkylphénols, de sulfates et de phosphates alkyles, de composés quaternaires de l'ammonium, de dérivés d'amines, d'esters du polyéthylèneglycol et de monostéarates ou de distéarates de la glycérine.

2. Élément de couplage antistatique élastique selon la revendication 1, **caractérisé en ce que** le polyuréthanne est préparé avec des polyesterpolyols en tant que composants alcooliques.

3. Élément de couplage antistatique élastique selon la revendication 1, **caractérisé en ce que** le polyuréthanne est préparé avec du butanediol en tant que composant alcoolique.

4. Élément de couplage antistatique élastique selon la revendication 1 à 3, **caractérisé en ce que** le polyuréthanne est préparé avec du diisocyanate de 1,5-naphtylène en tant que composant d'isocyanate.

5. Élément de couplage antistatique élastique selon l'une quelconque des revendications précédentes, **caractérisé en ce qu'**il présente une résistance superficielle de moins de 3*10⁸Ohms.

6. Élément de couplage antistatique élastique selon l'une quelconque des revendications précédentes, **caractérisé en ce qu'**il est un anneau intermédiaire pour couplages, en particulier pour couplages à mâchoires.

7. Élément de couplage antistatique élastique selon l'une quelconque des revendications précédentes, **caractérisé en ce qu'**il est un anneau intermédiaire pour couplages dans un environnement présentant des risques d'explosion, comme dans les mines.
